# FASCICULE DE BREVET EUROPEEN

(11) **EP 1 918 859 B1**
(45) Date de publication et mention de la délivrance du brevet: **29.07.2009**
(21) Numéro de dépôt: 07291312.2
(22) Date de dépôt: 31.10.2007
(51) Int. Cl.: G06K 19/073, G06K 19/07

(54) **Dispositif de protection contre la fraude des objets de communication sans contact**
Device for protection against fraud in contactless communication objects
Device for protection against fraud in contactless communication objects

(30) Priorité: 03.11.2006 FR 0609610
(43) Date de publication de la demande: 07.05.2008
(73) Titulaire: Xiring SA, 92518 Suresnes Cedex (FR)
(72) Inventeur: Deborgies, Luc, 92320 Chatillon (FR)
(74) Mandataire: Debay, Yves

(56) Documents cités:
- WO-A-20/05052846
- JUELS A ET AL ASSOCIATION FOR COMPUTING MACHINERY: "The Blocker Tag: Selective Blocking of RFID tags for Consumer Privacy" PROCEEDINGS OF THE 10TH. ACM CONFERENCE ON COMPUTER AND COMMUNICATIONSSECURITY. (CCS'03). WASHINGTON, DC, OCT. 27 - 31, 2003, ACM CONFERENCE ON COMPUTER AND COMMUNICATIONS SECURITY, NEW YORK, NY : ACM, US, vol. CONF. 10, 27 octobre 2003 (2003-10-27), pages 103-111, XP002341165 ISBN: 1-58113-738-9

## Description

L'invention concerne le domaine des communications sans contact entre d'une part une borne ou un lecteur sans contact, et d'autre part des objets de communication sans contact. L'invention concerne notamment un dispositif de protection des objets de communication sans contact.

Les objets de communication sans contact, comme par exemple les cartes à circuit intégré communicant sans contact, sont utilisés, de façon très variée, par exemple pour effectuer un paiement, réaliser une identification du porteur de l'objet de communication sans contact ou stocker des informations. Des cartes de ce type sont, par exemple, utilisées pour le contrôle d'accès ou le paiement automatique dans le métro. L'utilisateur passe simplement sa carte à proximité d'une borne, par exemple, contrôlant l'accès au métro, pour activer la carte qui communique à la borne les informations nécessaires pour certifier la validité d'un abonnement. L'utilisation d'une carte à circuit intégré communicant sans contact, avec un terminal ou une borne ou un lecteur sans contact, permet, par exemple, à l'utilisateur de gagner beaucoup de temps.

Dans ce type de système de communication entre une borne ou un lecteur sans contact et un objet de communication sans contact, la communication est réalisée par émission d'ondes de radiofréquence. La norme ISO/IEC 14443, établie par l'Organisme International de Normalisation et la Commission Internationale sur l'Electrotechnique, définit par exemple un ensemble de règles concernant les cartes d'identification, les cartes à circuit intégré sans contact et les cartes de proximité. Conformément à cette norme, la borne ou le lecteur sans contact émet des signaux de radiofréquence, dans un spectre de fréquences déterminé autour de 13,56MHz, pour transmettre des informations et de l'énergie d'alimentation à la carte sans contact. D'autres caractéristiques de cette norme concernent, par exemple, des règles anti-collision lorsqu'une borne ou un lecteur sans contact communique avec plusieurs cartes simultanément.

Cependant les applications réalisées par des objets de communication sans contact ne sont généralement pas sécurisées. En effet les objets de communication sans contact, comme par exemple des cartes, s'activent, généralement, automatiquement lors de leur passage dans un domaine de portée d'une borne ou d'un lecteur sans contact, le domaine de portée correspondant à une région de l'espace autour de la borne ou du lecteur, dans laquelle le signal de radiofréquence émis par la borne ou le lecteur a une puissance suffisante pour activer l'objet de communication sans contact. Ainsi le porteur d'une carte de paiement par communication sans contact pourrait être taxé, sans raison valable, de façon accidentelle ou par une borne ou un lecteur pirate. Un problème technique des cartes ou des objets de communication sans contact est donc de protéger ces cartes ou ces objets contre d'éventuelles intrusions ou contre une utilisation involontaire.

De plus un objet de communication sans contact, comme par exemple une carte, peut généralement être utilisé par n'importe quel utilisateur. Une carte volée d'accès au métro permet, par exemple, d'ouvrir les portails d'accès payant. Un autre problème technique des cartes ou des objets de communication sans contact est donc de permettre leur utilisation par un utilisateur ou un groupe d'utilisateurs déterminé, afin par exemple de protéger ces cartes ou ces objets contre le vol.

La demande de brevet WO 2005/031663 enseigne un dispositif de paiement relatif aux cartes de paiement sans contact, sécurisé par la mesure d'un paramètre biométrique de l'utilisateur. Un lecteur du paramètre biométrique communique ainsi avec la carte de paiement pour autoriser l'activation de la carte et réaliser un paiement, la carte étant, par défaut, par exemple, dans un état non activé. Cependant la réalisation d'un tel dispositif de paiement sécurisé, nécessite de modifier l'agencement du circuit électronique de la carte de paiement sans contact pour avoir d'une part une liaison sécurisée de communication entre le lecteur biométrique et la carte de paiement et d'autre part une liaison de communication avec une borne de paiement commandée dans un état activé ou désactivé. Ces modifications complexes apportées dans une carte de paiement dont le volume est très limité, sont donc très coûteuses. De plus un tel dispositif de sécurité nécessite d'avoir un lecteur biométrique associé à chaque carte de paiement.

Il est également connu, par le document WO 2005/052846, un brouilleur pour brouiller la lecture de supports de données sans contact par un lecteur émettant des signaux de balayage électromagnétiques, ayant une interface radio pour recevoir des signaux électromagnétiques, ayant des moyens d'analyse pour analyser les signaux électromagnétiques reçus par l'interface radio, et ayant des moyens générateurs de signal de brouillage pour générer un signal de brouillage, les moyens d'analyse pour analyser les signaux électromagnétiques reçus étant prévus pour identifier les signaux de balayage du lecteur parmi les signaux électromagnétiques reçus et, lorsque les signaux de balayage sont détectés, pour transmettre un signal de commande aux moyens générateurs de signal de brouillage, les moyens générateurs de signal de brouillage étant arrangés pour générer le signal de brouillage et le transmettre via l'interface radio à la réception d'un signal de commande. Mais ce type de dispositif ne permet pas de valider ou invalider le brouillage par le brouilleur via des moyens d'interruption commandés, selon le résultat d'une comparaison effectuée, par des moyens de comparaison entre d'une part, une information provenant de moyens interactifs d'authentification et d'autre part, une information mémorisée dans des moyens de mémorisation.

La présente invention a pour objectif de pallier un ou plusieurs inconvénients de l'art antérieur en proposant un dispositif de protection pour objet de communication sans contact, l'objet de communication sans contact communicant avec une borne ou un lecteur sans contact, étant protégé de façon simple, contre une intrusion accidentelle ou frauduleuse, sans nécessiter de modification dans l'agencement du circuit électronique de cet objet.

Cet objectif est atteint grâce à un dispositif de protection pour objet de communication sans contact à circuit intelligent mémorisant des informations sensibles ou des informations donnant accès à des services, caractérisé en ce que le dispositif de protection comprend au moins des moyens de réception radio de premiers signaux radio émis par une borne ou un lecteur sans contact, dans une plage de fréquences de l'ordre du mégahertz à quelques dizaines de mégahertz, les premiers signaux reçus générant l'énergie de fonctionnement du dispositif de protection pour activer un circuit du dispositif de protection générateur d'un signal de brouillage à émettre par des moyens d'émission du dispositif de protection sous la forme d'ondes radio de brouillage destinées à la borne ou au lecteur, les ondes radio de brouillage étant produites à la réception des premiers signaux avec une puissance suffisante pour être reçues par des moyens de réception radio de la borne ou du lecteur et détériorer la réception par les moyens de réception radio de la borne ou du lecteur de seconds signaux radio émis par l'objet de communication sans contact, en réponse à l'activation par la borne ou le lecteur, et des moyens d'interruption pour valider ou invalider le brouillage par le dispositif de protection, les moyens d'interruption du dispositif de protection étant commandés, selon le résultat d'une comparaison effectuée, par des moyens de comparaison entre d'une part, une information provenant de moyens interactifs d'authentification et d'autre part, une information mémorisée dans des moyens de mémorisation du dispositif de protection.

Selon une autre particularité, l'objet de communication sans contact, protégé par le dispositif de protection, est activé dans un domaine de portée de la borne ou du lecteur, la borne ou le lecteur, émettant les premiers signaux radio par des moyens d'émission radio, pour communiquer avec l'objet de communication sans contact et alimenter l'objet de communication sans contact, en énergie par des moyens de réception radio de l'objet de communication sans contact, l'objet de communication sans contact émettant les seconds signaux radio, par des moyens d'émission radio de l'objet de communication sans contact, pour communiquer avec la borne ou le lecteur, par les moyens de réception radio de la borne ou du lecteur.

Selon une autre particularité, les moyens de réception radio de l'objet de communication sans contact et les moyens de réception radio du dispositif de protection comprennent chacun une bobine appartenant à un circuit résonnant accordé déterminé.

Selon une autre particularité, les moyens d'émission radio de l'objet de communication sans contact et les moyens d'émission radio du dispositif de protection comprennent chacun la bobine dans le circuit résonnant accordé utilisé pour la réception radio.

Selon une autre particularité, la communication, entre d'une part la borne ou le lecteur et d'autre part l'objet de communication sans contact, étant réalisée selon un protocole anti-collision déterminé, l'objet de communication sans contact émettant les seconds signaux radio en réponse aux premiers signaux radio au moins après l'émission d'une requête par les premiers signaux, le circuit du dispositif de protection commande une émission des ondes radio de brouillage en réponse aux premiers signaux radio, l'émission des ondes radio de brouillage se maintenant durant la réception des premiers signaux.

Selon une autre particularité, le signal de brouillage, reçu par la borne ou le lecteur, est représentatif de données déterminées traitées par des moyens de traitement de la borne ou du lecteur, pour provoquer une réinitialisation dans l'exécution du protocole anti-collision.

Selon une autre particularité, le signal de brouillage, reçu par la borne ou le lecteur, est représentatif de données déterminées traitées par des moyens de traitement de la borne ou du lecteur pour provoquer une saturation des moyens de traitement.

Selon une autre particularité, le signal de brouillage généré, lors de la réception des premiers signaux émis par la borne ou le lecteur, par le circuit du dispositif de protection, est un signal prédéterminé pour économiser l'énergie dépensée par le circuit en faveur de l'énergie utilisée par les moyens d'émission radio du dispositif de protection.

Selon une autre particularité, le circuit du dispositif de protection comprend un compteur diviseur de la fréquence de modulation des premiers signaux émis par la borne ou le lecteur.

Un autre objectif de la présente invention est de proposer un dispositif de protection contre le vol, en protégeant l'utilisation d'un objet de communication sans contact par des moyens d'identification.

Selon cet objectif, les moyens interactifs du dispositif de protection comprennent un capteur biométrique transmettant à un circuit d'authentification du dispositif de protection une information représentative d'un paramètre biométrique mesuré à comparer avec au moins une information représentative d'un paramètre biométrique d'un utilisateur autorisé à utiliser l'objet de communication sans contact, constituant l'information mémorisée dans les moyens de mémorisation du dispositif de protection .

Selon une variante, les moyens interactifs du dispositif de protection comprennent un clavier alphanumérique transmettant à un circuit d'authentification du dispositif de protection une information représentative d'un code entré par un utilisateur à comparer avec au moins un code d'autorisation de l'utilisation de l'objet de communication sans contact, constituant l'information mémorisée dans les moyens de mémorisation du dispositif de protection.

Selon une autre particularité, les moyens d'interruption comprennent un interrupteur ou un bouton poussoir disposé à la surface du dispositif de protection ou dans un logement en creux aménagé dans l'épaisseur du dispositif de protection.

Selon une autre particularité, les moyens d'interruption comprennent un interrupteur électronique disposé à l'extrémité d'une ligne de communication avec le dispositif de protection.

Un autre objectif de la présente invention est de pallier un ou plusieurs inconvénients de l'art antérieur en proposant un système portable de communication sans contact, dans lequel un objet de communication sans contact est protégé, de façon simple, contre une intrusion accidentelle ou frauduleuse, sans nécessiter de modification dans l'agencement du circuit électronique de l'objet.

Cet objectif est atteint grâce à un système sécurisé portable de communication sans contact comprenant au moins un objet de communication sans contact à circuit intelligent mémorisant des informations sensibles ou des informations donnant accès à des services, l'objet de communication sans contact comprenant des moyens de réception radio de signaux de communication et d'alimentation et des moyens d'émission radio de signaux de communication, une première bobine déterminée dans un premier circuit résonnant accordé appartenant aux moyens d'émission et de réception radio de l'objet de communication sans contact, le système étant caractérisé en ce qu'il comporte au moins :
un dispositif de protection comprenant des moyens de réception radio de signaux de communication et d'alimentation, dans une plage de fréquences de l'ordre du mégahertz à quelques dizaines de mégahertz, pour activer un circuit du dispositif de protection générateur d'un signal de brouillage à émettre par des moyens d'émission du dispositif de protection sous la forme d'ondes radio de brouillage, une seconde bobine déterminée dans un second circuit résonnant accordé appartenant aux moyens d'émission et de réception radio du dispositif de protection, le dispositif de protection comprenant des moyens d'interruption permettant de valider ou d'invalider le fonctionnement du générateur du signal de brouillage du dispositif de protection,
les moyens d'interruption du circuit de brouillage étant commandés, selon le résultat d'une comparaison effectuée, par des moyens de comparaison entre d'une part une information provenant de moyens interactifs d'authentification et d'autre part une information mémorisée dans des moyens de mémorisation du dispositif de protection.

Selon une autre particularité, le dispositif de protection et l'objet de communication sans contact, sont rendus solidaires dans un boîtier à fermeture sécurisée, dont la fermeture valide le fonctionnement du dispositif de protection.

Selon une autre particularité, le boîtier sécurisé est moulé d'un seul bloc autour du dispositif de protection et de l'objet de communication sans contact.

Selon une autre particularité, le boîtier sécurisé est fermé autour du dispositif de protection et de l'objet de communication sans contact, l'ouverture du boîtier étant commandée par une clé sécurisée.

Un autre objectif de la présente invention est de permettre la protection d'une pluralité d'objets de communication sans contact par un même dispositif de protection.

Selon cet objectif, le boîtier sécurisé comporte un logement pour accueillir au moins un objet supplémentaire de communication sans contact mémorisant des informations sensibles ou des informations donnant accès à des services.

Un autre objectif de la présente invention est de proposer un système de communication sans contact protégé contre le vol, en protégeant son utilisation par des moyens d'identification.

Selon cet objectif, les moyens interactifs d'authentification comprennent un clavier alphanumérique transmettant aux moyens de comparaison, une information représentative d'un code entré par un utilisateur, comparé avec au moins un code d'autorisation de l'utilisation de l'objet de communication sans contact.

Selon une autre particularité, les moyens interactifs d'authentification comprennent un capteur biométrique transmettant aux moyens de comparaison, une information représentative d'un paramètre biométrique mesuré, comparée avec au moins une information représentative d'un paramètre biométrique d'un utilisateur autorisé à utiliser l'objet de communication sans contact.

Selon une autre particularité, le capteur biométrique est un capteur d'empreinte digitale.

Selon une autre particularité, le capteur d'empreinte digitale est un lecteur optique devant lequel l'utilisateur passe son doigt.

Selon une autre particularité, le capteur biométrique est un lecteur d'iris.

Selon une autre particularité, le capteur biométrique est un analyseur d'empreinte vocale.

Selon une autre particularité, les moyens interactifs d'authentification et les moyens de comparaison comprennent des moyens d'alimentation pour réaliser la comparaison et commander les moyens d'interruption avant l'entrée du système sécurisé dans le domaine de portée.

Un autre objectif de la présente invention est de pallier un ou plusieurs inconvénients de l'art antérieur en proposant un dispositif simple de protection d'un objet de communication sans contact, contre une intrusion accidentelle ou frauduleuse, sans nécessiter de modification dans l'agencement du circuit électronique de l'objet et conçu pour s'adapter aux appareils existants.

Cet objectif est atteint par un dispositif de protection d'au moins un objet de communication sans contact à circuit intelligent mémorisant des informations sensibles ou des informations donnant accès à des services, caractérisé en ce qu'il comprend au moins des moyens de réception de signaux radio dans une plage de fréquences de l'ordre du mégahertz à quelques dizaines de mégahertz, les signaux radio reçus générant l'énergie de fonctionnement du dispositif de protection pour activer un circuit générateur d'un signal de brouillage à émettre par des moyens d'émission du dispositif de protection sous la forme d'ondes radio de brouillage, une bobine déterminée dans un circuit résonnant accordé appartenant aux moyens d'émission et de réception radio du dispositif de protection, et des moyens d'interruption validant ou invalidant le fonctionnement du générateur du signal de brouillage du dispositif de protection, les moyens d'interruption du dispositif de protection étant commandés, selon le résultat d'une comparaison effectuée, par des moyens de comparaison entre d'une part, une information provenant de moyens interactifs d'authentification et d'autre part, une information mémorisée dans des moyens de mémorisation du dispositif de protection.

Selon une autre particularité, le signal de brouillage est émis dès réception des premiers signaux avant la fin d'une requête conforme à un protocole de communication.

Selon une autre particularité, au moins les moyens d'émission et de réception radio du dispositif de protection et le circuit du dispositif de protection sont insérés dans un boîtier de mêmes dimensions que l'objet de communication sans contact à circuit intelligent protégé.

Selon une autre particularité, les moyens d'interruption comprennent un interrupteur disposé à la surface du dispositif de protection ou dans un logement en creux aménagé dans l'épaisseur du dispositif de protection.

Selon une autre particularité, les moyens d'interruption comprennent un interrupteur disposé à l'extrémité d'une ligne de communication avec le dispositif de protection.

L'invention, ses caractéristiques et ses avantages apparaîtront plus clairement à la lecture de la description faite en référence aux figures référencées ci-dessous :
- la figure 1 représente un exemple de système de communication sans contact sécurisé selon l'invention ;
- la figure 2 représente un schéma électronique d'un exemple de dispositif de protection selon l'invention ;
- la figure 3 représente une vue en perspective d'un exemple de dispositif de protection selon l'invention, au format d'une carte de crédit et équipé d'un interrupteur ;
- la figure 4 représente une vue en perspective d'un exemple de dispositif de protection selon l'invention, équipé d'une télécommande ;
- la figure 5 représente une vue en perspective d'un ensemble de communication sans contact selon l'invention sécurisé par un clavier pour entrer un code secret ;
- les figures 6, 7 et 8 représentent chacune une vue en perspective d'un ensemble de communication sans contact selon l'invention sécurisé par un lecteur d'un paramètre biométrique.

L'invention va à présent être décrite en référence aux figures précédemment citées. Un dispositif (1) de protection est utilisé avec un ou plusieurs objets (3), par exemple portatifs, établissant une communication sans contact avec une borne (2) ou un lecteur. Les objets de communication sans contact (3) sécurisés sont disposés dans un domaine (20) de portée de la borne ou le lecteur, pour être alimentés par les ondes (S22) radio, émises par la borne (2) ou le lecteur, et établir une communication sans contact avec celle-ci. Le dispositif (1) de protection est placé dans le domaine (20) de portée, en même temps qu'un ou plusieurs objets (3) de communication sans contact à protéger. Dans le domaine de portée le champ électromagnétique a par exemple, de manière non limitative, une valeur comprise entre 1A/m et 10A/m.

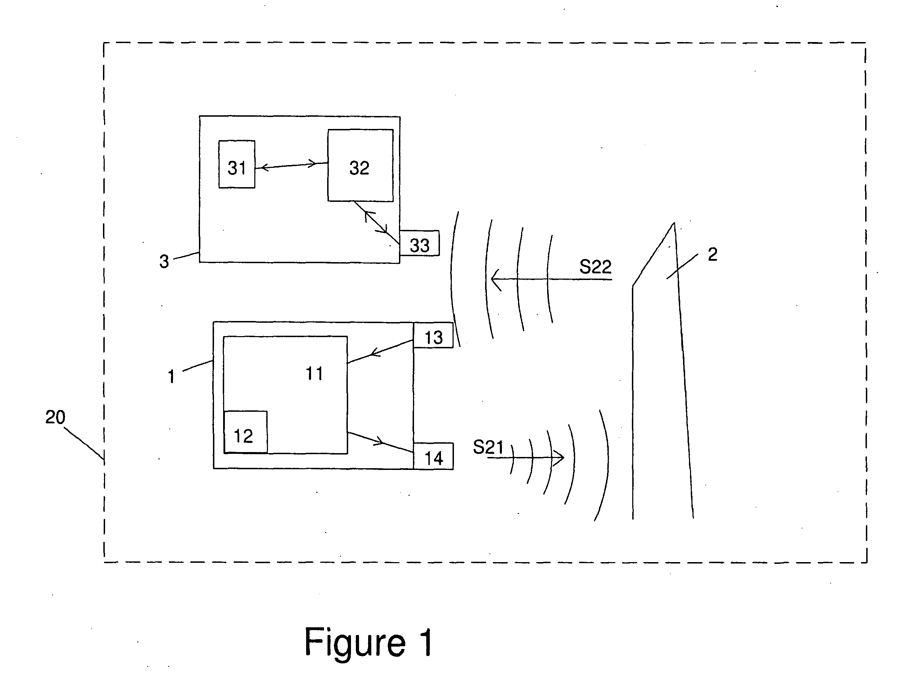

Comme représenté à la figure 1, le dispositif (1) de protection est disposé dans le domaine (20) de portée de la borne (2) de communication ou du lecteur, pour sécuriser l'objet (3) de communication sans contact à circuit intelligent mémorisant des informations sensibles ou des informations donnant accès à des services. Le dispositif (1) de protection se trouve donc dans le domaine (20) de la borne ou du lecteur, de même que le ou les objets de communication protégés par le dispositif de protection. L'objet (3) de communication sans contact comprend par exemple un espace (31) mémoire comprenant les informations sensibles ou donnant accès à des services, en communication avec un circuit (32) d'alimentation et de traitement. Le circuit (32) d'alimentation et de traitement est relié, d'autre part, à des moyens de communication et d'alimentation par des ondes radio, comprenant par exemple une antenne (33).

Le dispositif (1) de protection comprend des moyens (13) de réception et d'alimentation radio en communication avec des moyens d'alimentation et des moyens de traitement, par exemple sous la forme d'un circuit (11) d'alimentation et de traitement, activé ou désactivé par des moyens (12) d'interruption. Les moyens (12) d'interruption comprennent par exemple un interrupteur (101) ou un bouton poussoir, pour autoriser ou non le fonctionnement du dispositif (1) de protection. L'interrupteur (101) est, de manière non limitative, un interrupteur à contact actionné mécaniquement ou un interrupteur électronique comprenant, par exemple, un transistor commandé. L'interrupteur est par exemple positionné par un bouton poussoir réalisant ou non un contact électrique selon sa position.

Selon un autre exemple de réalisation, un interrupteur à transistor, comme par exemple un transistor de puissance, est commandé par des moyens de commande électroniques, dans une position passante ou bloquée, selon un paramètre d'entrée. Le paramètre d'entrée est par exemple la position d'un bouton de commande ou le résultat d'une comparaison entre une information numérique mémorisée dans des moyens de mémorisation du dispositif de protection et une information représentative d'un paramètre biométrique produit par un capteur. De manière non limitative, la comparaison est effectuée dans un dispositif d'authentification ou dans le dispositif (1) de protection. Selon un autre exemple de réalisation, sans sortir de l'esprit de l'invention, la comparaison est effectuée dans l'objet de communication protégé.

Lorsque les moyens (12) d'interruption sont placés dans une position d'autorisation de fonctionnement, un signal (S22) radiofréquence reçu par les moyens (13) de réception, déclenche l'alimentation du dispositif (1) de protection, par ses moyens d'alimentation. Le circuit (11) d'alimentation et de traitement, par exemple, alimenté en énergie, comprend des moyens de traiter le signal radiofréquence reçu pour émettre un signal (S21) radiofréquence de brouillage par des moyens (14) d'émission du dispositif (1) de protection.

Lorsque les moyens (12) d'interruption sont placés dans une position d'interdiction du fonctionnement, le dispositif (1) de protection n'émet plus de signal radio de brouillage. Les moyens d'interruption comprennent par exemple un interrupteur (101) pour commander, de manière non limitative, l'activation ou la désactivation des moyens de réception, des moyens d'alimentation, des moyens de traitement ou des moyens d'émission.

Un signal (S22) radiofréquence, émis par une borne (2) ou un lecteur sans contact, couvre son domaine (20) de portée et diffuse de l'énergie en même temps qu'une information. Ce signal (S22) est par exemple utilisé par l'objet (3) de communication sans contact à circuit intelligent, en partie pour son alimentation en énergie et en partie pour recevoir et traiter l'information contenue. Le signal (S22) émis par la borne (2) ou le lecteur est par exemple émis avec une première fréquence de modulation déterminée selon un premier type de modulation déterminée. Le signal émis par l'objet (3) de communication sans contact à circuit intelligent, est par exemple émis avec une deuxième fréquence de modulation déterminée selon un deuxième type de modulation déterminée. Pour brouiller cette communication, lors de son activation, le dispositif (1) de protection comprend des moyens d'alimentation, des moyens de réception et de démodulation et des moyens d'émission et de modulation compatible avec la borne ou le lecteur, par exemple, de manière non limitative, identiques à ceux de l'objet (3) de communication sans contact à circuit intelligent. De manière non limitative, lors de la réception d'un signal (S22) émis par la borne ou le lecteur, le signal (S21) de brouillage est représentatif d'informations dépendantes ou non des informations reçues. De manière non limitative, le signal (S21) de brouillage est représentatif d'un message aléatoire, d'une suite de « 1 », d'une suite de « 0 » ou d'un message résultant du traitement du message reçu.

De manière non limitative, un type d'objet de communication sans contact, sécurisé par le dispositif de protection, est, par exemple, décrit dans la demande de brevet WO 98/26370. Les objets communiquant sans contact sont, de manière non limitative, des objets portables réalisés au format standard des cartes de crédit. Le dialogue entre la borne de communication ou le lecteur sans contact, et les objets de communication sans contact est, par exemple, décrit dans le brevet EP 0 472 472.

Le dispositif (1) de protection est aussi utilisé, de manière non limitative, pour sécuriser un ou plusieurs objets (3) de communication sans contact, comme les cartes d'identification, les cartes à circuit intégré sans contact ou les cartes de proximité conformes à la norme ISO/IEC 14443, définie par l'Organisme International de Normalisation et la Commission Internationale sur l'Electrotechnique. L'édition 2001 de la norme ISO/IEC 14443 sur les cartes d'identification, les cartes à circuit intégré sans contact ou les cartes de proximité, est subdivisée en quatre parties. Une première partie désignée par ISO/IEC14443-1:2001, porte sur les caractéristiques physiques de ces cartes. Une seconde partie désignée par ISO/IEC14443-2:2001, porte sur l'interface radio fréquence et les signaux de communication et notamment sur les éléments à fournir pour l'alimentation de la carte et la communication bidirectionnelle entre la carte et la borne ou le lecteur. Une troisième partie désignée par ISO/IEC14443-3:2001, porte sur l'initialisation et l'anti-collision et notamment sur les méthodes pour communiquer avec une carte dans un environnement comprenant plusieurs cartes. Une quatrième partie désignée par ISO/IEC14443-4:2001, porte sur le protocole de transmission.

Le signal (S21) de brouillage est émis à la réception du signal (S22) émis par la borne (2) ou le lecteur, lorsque les moyens d'interruption du dispositif de protection, sont dans une position d'autorisation du fonctionnement. L'émission, commandée par les moyens de traitement du dispositif de protection, est réalisée, de manière non limitative, dès la réception du signal ou après une temporisation déterminée. Le signal (S21) de brouillage est ainsi répété pour chaque signal (S22) reçu, émis par la borne (2) ou le lecteur. Tandis qu'un objet (3) de communication sans contact à circuit intelligent respecte des créneaux temporels d'autorisation d'émission ou d'attente d'émission, le dispositif de protection émet un signal de brouillage tant que ses moyens d'alimentation fournissent de l'énergie. Une borne (2) ou un lecteur sans contact, fonctionnant par exemple selon la norme ISO/IEC 14443 établit par exemple un dialogue avec un ou plusieurs objets (3) de communication sans contact à circuit intelligent selon un protocole déterminé de communication dans des créneaux temporels, également appelés slots. Le signal (S21) de brouillage est émis par le dispositif de brouillage en même temps que le signal (S22) émis par la borne ou le lecteur, en même temps qu'un signal émis par un objet (3) de communication sans contact à circuit intelligent ou dans un créneau temporel normalement inoccupé. Un créneau temporel normalement inoccupé est par exemple, un temps d'attente d'émission par l'objet (3) de communication sans contact, après la réception d'un signal (S22) émis par la borne (2) ou le lecteur. Ainsi le message représentatif d'un signal émis par un objet (3) de communication sans contact est brouillé par le signal (S21) additionnel de brouillage. De plus le protocole de communication, utilisé par la borne (2) ou le lecteur, devient complètement inutilisable. Ce type de protocole, qui commence par exemple par une étape d'initialisation, reste bloqué, de manière non limitative, à l'étape d'initialisation.

De façon avantageuse, le dispositif de protection selon l'invention, est ajouté à un système de communication fonctionnel entre une borne ou un lecteur sans contact, et un ou plusieurs objets (3) de communication sans contact à circuit intelligent, pour réaliser un mur virtuel entre la borne (2) ou le lecteur, et le ou les objets (3) de communication sans contact, sans modification de la structure du système de communication existant. Un utilisateur empêche ainsi, en activant le dispositif de sécurité, une intrusion dans les informations sensibles ou les informations donnant accès à des services, contenues dans son objet (3) de communication sans contact à circuit intelligent. Pour utiliser son objet (3) de communication sans contact, l'utilisateur désactive le dispositif de sécurité par les moyens d'interruption.

De façon avantageuse, le dispositif (2) de protection selon l'invention, alimenté par radio fréquences, utilise les mêmes sources d'énergie pour son alimentation, que l'objet (3) de communication sans contact protégé. De manière non limitative les moyens de réception comprennent une antenne utilisée aussi par les moyens d'émission pour émettre le signal de brouillage. La fréquence porteuse du signal reçu ou émis par le dispositif de sécurité est par exemple une fréquence déterminée de type ondes courtes, comprise entre 1 Mhz et 30Mhz.

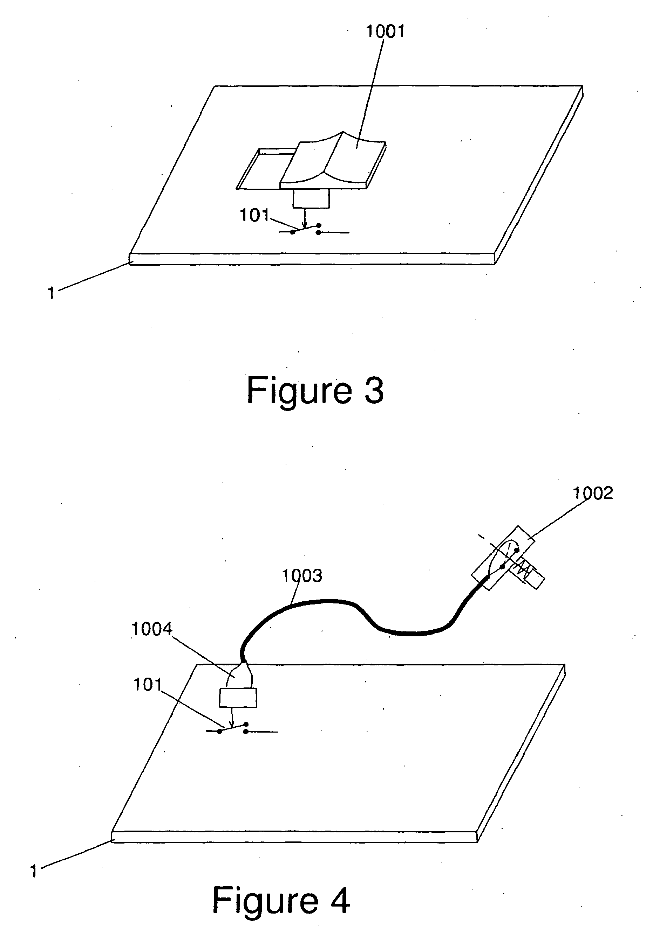

De façon avantageuse, le dispositif (1) de protection, comme représenté aux figures 3 et 4, est réalisé avec les dimensions d'une carte de crédit. Ainsi le dispositif (1) de protection est disposé, avec une carte de communication sans contact, dans un portefeuille, le dispositif (1) de protection étant activé ou désactivé. De cette façon, lorsque la carte de communication sans contact est placée dans un domaine (20) de portée d'une borne (2) ou d'un lecteur sans contact, le dispositif (1) de protection est placé en même temps dans ce domaine (20) de portée pour sécuriser la carte lorsque le dispositif de protection est activé. Comme représenté à la figure 3, un bouton poussoir (1001), disposé sur le dispositif (1) de protection, commande mécaniquement ou électroniquement la position de l'interrupteur (101) pour activer ou désactiver le dispositif (1) de protection. Le bouton poussoir disposé dans un logement en creux dans le dispositif de protection, permet d'avoir une épaisseur minimum pour placer le dispositif de protection dans un portefeuille. Lorsque le dispositif de protection est activé et placé dans un portefeuille avec une carte de communication sans contact, l'utilisateur peut transporter son portefeuille en toute sécurité, sans risque d'intrusion par une borne radiofréquence ou un lecteur sans contact. Pour utiliser sa carte de communication sans contact, par exemple pour effectuer des paiements dans un espace commercial sécurisé, l'utilisateur désactive le dispositif de protection en basculant le bouton (1001) poussoir, le dispositif de protection restant par exemple sans son portefeuille.

La figure 4 représente une variante d'un dispositif (1) de protection désactivé par une télécommande (1004, 1003, 1002). Le dispositif (1) de protection est par exemple relié par un connecteur (1004) à un câble (1003) de communication bifilaire à l'extrémité duquel est relié un bouton (1002) poussoir positionné par l'utilisateur. Le bouton (1002) réalise directement une connexion électrique ou active ou désactive un circuit électronique de commande de l'interrupteur (101), relié au connecteur (1004). Le dispositif (1) de protection est, par exemple, disposé dans le portefeuille de l'utilisateur avec une carte de communication sans contact à sécuriser, le portefeuille étant dans la poche intérieure de la veste de l'utilisateur. Le câble part par exemple du connecteur (1004), puis passe à l'intérieur de la manche de la veste jusqu'à la main de l'utilisateur qui peut d'une pression de la main, changer l'état du bouton poussoir (1002) pour produire, par le connecteur (1004), un signal de commande de désactivation du dispositif de protection. L'utilisateur commande ainsi des plages temporelles durant lesquelles la communication radiofréquence avec sa carte de communication sans contact est autorisée. Lorsque l'interrupteur (101) n'est pas activé, le dispositif de protection est par exemple activé, par défaut.

Selon un autre exemple de réalisation, l'objet portable de communication sans contact et le dispositif de protection sont réalisés sous la forme de solide compact, par exemple accroché à un même anneau porte-clefs.

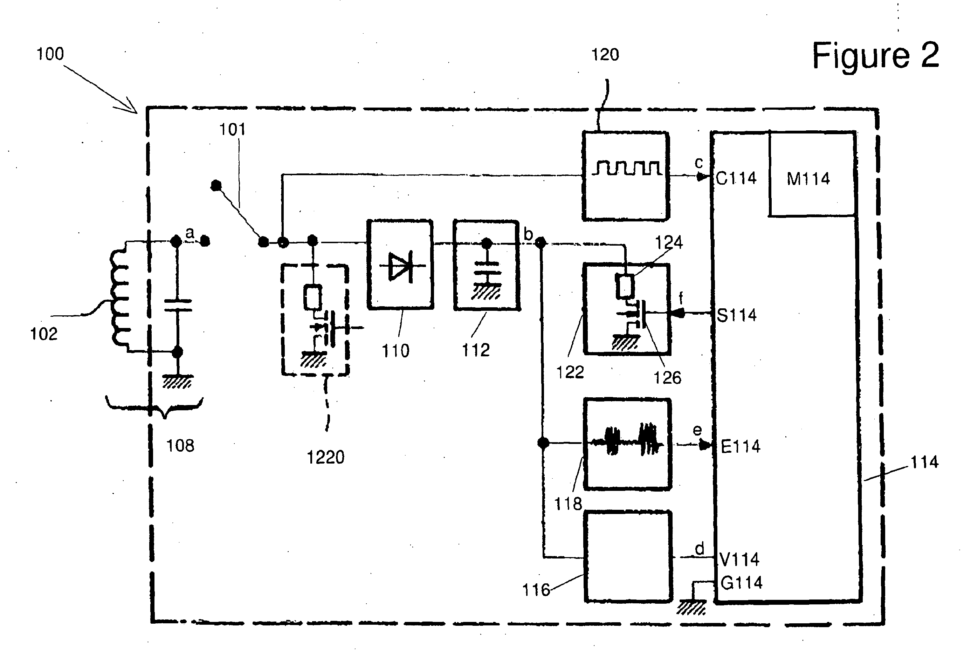

Selon un exemple non limitatif de réalisation, comme représenté à la figure 2, le dispositif (1) de sécurité comprend un circuit (100) électronique activé dans le domaine (20) de portée d'une borne (2) ou d'un lecteur sans contact, lorsque son interrupteur (101) est dans une position d'activation, autorisant le fonctionnement du dispositif de sécurité.

De manière non limitative, l'interrupteur coupe le circuit (108) de réception pour empêcher ou autoriser, en même temps la réception de l'information et la réception de l'énergie d'alimentation.

Selon un autre exemple de réalisation, l'interrupteur (101) est connecté à une entrée d'un circuit (114) intelligent, l'état logique de cette entrée déterminant l'état du circuit intelligent (114) pour commander ou non l'émission d'onde de brouillage.

Selon un autre exemple de réalisation, l'interrupteur (101) coupe ou non le circuit d'émission (1220, 122) du reste du circuit pour empêcher l'émission d'ondes radio de brouillage.

Ce circuit (100) électronique comprend, de manière non limitative, une bobine (102), appartenant à un circuit résonnant accordé (108) rayonnant le champ en espace libre, pour capter un champ magnétique (S22) modulé en provenance de la borne (2) ou du lecteur, ou pour produire en réponse un signal de brouillage modulé (S21) de ce champ magnétique. Les signaux sont, par exemple, modulés selon une fréquence porteuse d'environ 13MHz, pour une bobine, de manière non limitative, de l'ordre de 4 à une dizaine de spires. De manière non limitative, de façon avantageuse, le nombre de spires du dispositif (1) de protection étant supérieur au nombre de spires de l'objet (3) de communication protégé, le dispositif (1) de protection aura un temps minimum de réponse inférieur à celui de l'objet protégé, lors de la réception des signaux radio émis par la borne ou le lecteur. Le circuit (100) électronique du dispositif de sécurité comprend aussi des moyens convertisseurs (110, 112, 116), coopérant avec la bobine (102), pour transformer le champ (S22) magnétique capté par cette dernière en une tension continue (d) d'alimentation du circuit (100) électronique du dispositif (1) de protection, ces moyens comprenant un étage de redressement (110) et un étage de filtrage (112). Un étage (116) régulateur est, par exemple, ajouté en série pour délivrer une tension (d) de valeur déterminée.

Le circuit (100) électronique du dispositif (1) de protection comprend, d'autre part, des moyens (108, 1220, 122) d'émission et des moyens (108, 110, 112, 120) de réception de données, coopérant également avec la bobine. Un étage (120) extracteur d'horloge, recevant en entrée le signal (a) recueilli aux bornes du circuit accordé (108), délivre en sortie un signal (c) appliqué à l'entrée d'horloge (C114) du circuit numérique (114) intelligent. L'étage (116) régulateur, stabilisateur de tension, délivre par exemple, en sortie, une tension continue, redressée, filtrée et stabilisée (d), appliquée notamment à une borne d'alimentation positive (V114) du circuit numérique (114) intelligent, dont l'autre borne (G114) d'alimentation est la masse. Un étage modulateur (122, 1220) opère, par exemple, par modulation de charge, cette technique consistant à faire varier de manière contrôlée le courant consommé par le circuit accordé (108) situé dans le champ magnétique environnant engendré par la borne ou le lecteur. Le circuit modulateur (122) comporte un élément résistif 124 (résistance rapportée ou, en technologie monolithique, composant de type MOS sans grille faisant office de résistance) en série avec un élément de commutation (126) (transistor MOS) commandé par un signal (f) de modulation généré par une sortie (S114) du circuit numérique 114.

Les moyens de réception comportent, de manière non limitative, des moyens (118) démodulateurs du signal capté par la bobine (102), ces moyens démodulateurs (118) opérant sur le signal (b) délivré en sortie des étages de redressement (110) et de filtrage (112). Un circuit (118) démodulateur fournit par exemple un signal (e) représentatif des informations comprises dans le signal (S22) radio émis par la borne (2) ou le lecteur. Le signal (e) en sortie du circuit (118) de démodulation, est transmis à une entrée (E114) du circuit (114) pour être traité. Le circuit (114) exécute, par exemple, un programme de traitement résidant dans sa mémoire (M114) pour produire un signal (f) de brouillage. De manière non limitative, les moyens démodulateurs réalisent une modulation d'amplitude ou respectivement de phase, les moyens d'émission comportant des moyens modulateurs réalisant une modulation d'amplitude ou respectivement de phase. Dans une variante de réalisation, le signal en entrée du démodulateur provient directement du circuit (108) résonnant sans être redressé ou filtré.

Selon un autre exemple de réalisation, le circuit (100) électronique du dispositif (1) de protection ne comprend pas de moyens de démodulation pour extraire l'information dans le signal (S22) radio émis par la borne (2) ou le lecteur. Le circuit (120) extracteur d'horloge fournit par exemple le signal d'horloge en entrée (C114) d'un circuit (114) intelligent compteur diviseur par un entier, égal par exemple à 16. Le circuit intelligent (114) diviseur produit, par exemple, un signal (f) de brouillage transmis à un circuit (122, 1220) modulateur. Selon une variante de réalisation, le signal de brouillage modulé est représentatif d'un message résident en mémoire (M114), l'émission étant cadencée par le signal (c) d'horloge.

De manière non limitative, l'étage modulateur (122), est placé en aval des circuits de redressement (110) et de filtrage (112), ou en amont de ces circuits, comme illustré sur la figure 2, c'est-à-dire directement aux bornes du circuit résonnant (108).

De manière non limitative, le signal radio (S21) de brouillage est émis, par une commande du circuit (114) intelligent, dès que le circuit (100) électronique est alimenté ou après une temporisation déterminée ou après la détection, par le circuit (114) intelligent, de la fin d'émission.

De façon avantageuse, la simplicité des opérations logiques réalisées par le composant (114) intelligent, par exemple de type diviseur, nécessite peu de ressources énergétiques pour le fonctionnement du composant (114) intelligent, et permet d'avoir une puissance d'émission maximum.

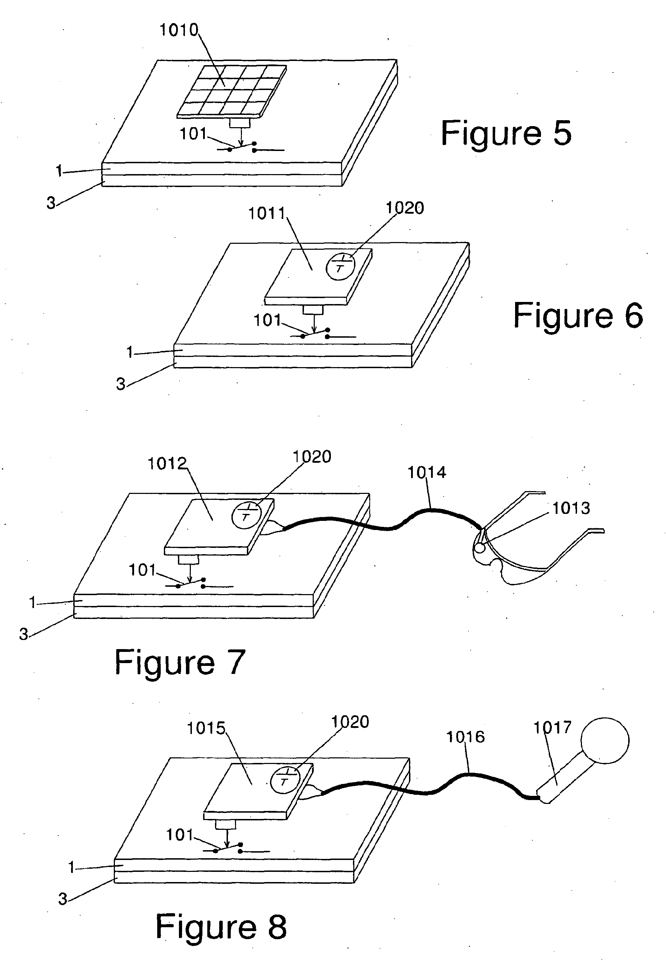

Selon une variante de réalisation, comme représenté aux figures 5 à 8, le dispositif (1) de protection est scellé à l'objet (3) portatif de communication sans contact à sécuriser. Le scellement est, par exemple, réalisé avec des éléments rigides imbriqués dans l'objet (3) portatif de communication sans contact à sécuriser de façon à détruire ou rendre inutilisable cet objet (3) portatif en cas de séparation.

Selon un autre exemple, l'objet (3) portatif de communication sans contact à sécuriser et le dispositif (1) de protection sont moulés dans une même pièce plastique.

Selon un autre exemple de réalisation, le dispositif de protection équipé d'un dispositif d'authentification, comprend en logement pour un ou plusieurs objets communicant sans contact, le logement étant ensuite fermé par des moyens de fermeture sécurisés. L'ouverture du logement, pour retirer les objets de communication sans contact, est par exemple réalisée grâce à une clé de sécurité. Les moyens de fermeture sécurisés comprennent par exemple des moyens de destruction des objets de communication sans contact. Les moyens de fermeture sécurisés comprennent par exemple des moyens d'écrasement d'une partie de l'objet de communication sans contact, pour invalider l'objet placé dans le logement, en cas d'effraction.

Dans les exemples de réalisation représentés aux figures 5 à 8, les moyens d'interruption activent ou désactivent le dispositif (1) de protection par un dispositif (1010 ; 1011 ; 1012, 1013, 1014 ; 1015, 1016, 1017) d'authentification. De manière non limitative, le dispositif d'authentification comprend des moyens d'alimentation ou est alimenté par les moyens d'alimentation du dispositif de protection. Dans le cas où le dispositif d'authentification nécessite une puissance importante et comprend ses propres moyens (1020) d'alimentation, comme par exemple une pile ou une batterie d'alimentation, le dispositif d'authentification maintient les moyens d'interruption en position d'activation du dispositif de protection, lorsque ses moyens (1020) d'alimentation ne sont plus fonctionnels. Dans le cas par exemple où un dispositif d'authentification comprend une pile d'alimentation et que cette pile ne stocke plus d'énergie, l'interrupteur reste, par exemple, en position fermée pour permettre le fonctionnement du dispositif de protection et empêcher une utilisation frauduleuses de l'objet (3) portatif de communication sans contact à protéger. L'ensemble formé par l'objet (3) portatif de communication sans contact et le dispositif (1) de protection équipé d'un dispositif d'authentification, est ainsi protégé contre les intrusions accidentelles ou frauduleuses et son utilisation est limitée à une personne ayant un accès valide auprès du dispositif d'authentification. Le dispositif d'authentification est, par exemple, configuré pour permettre l'utilisation par une seule personne ou par un groupe de personnes déterminées.

Selon un exemple de réalisation, le dispositif d'authentification comprenant des moyens (1020) d'alimentation, comprend des moyens de désactivation du fonctionnement du dispositif (1) de protection quelque soit la position du dispositif de protection, par exemple hors d'un domaine (20) de portée d'une borne ou d'un lecteur sans contact. De manière non limitative, la commande de désactivation est réalisée pendant une durée de désactivation déterminée ou jusqu'à ce que le dispositif (1) de protection sorte du domaine (20) de portée. Le dispositif d'authentification, en communication avec le dispositif (1) de protection, comprend, par exemple, des moyens de détecter que le dispositif (1) de protection n'est plus alimenté, pour commander les moyens (101) d'interruption du dispositif (1) de protection dans une position autorisant le fonctionnement du dispositif (1) de protection.

Selon l'exemple de la figure 5, le dispositif (1) de protection est par exemple désactivé par un dispositif (1010) d'authentification comportant un clavier. Lorsqu'un utilisateur tape le bon code d'identification sur le clavier, des premiers moyens de communication transmettent le code à des moyens de traitement du dispositif d'authentification, qui commandent, par des seconds moyens de communication, la désactivation du dispositif (1) de protection. Les moyens de traitement du dispositif d'authentification commandent, par exemple, l'interrupteur (101) dans une position ouverte ou fermée.

Selon une variante de réalisation, comme représenté à la figure 6, le dispositif (1) de protection est désactivé par un dispositif (1011) d'authentification par reconnaissance d'empreinte digitale. Des exemples non limitatifs de capteurs d'empreinte digitale sont : un capteur optique d'empreinte, un capteur électrique thermique, un capteur capacitif, un capteur de champ électrique ou un capteur de pression. Selon un exemple non limitatif de réalisation, un capteur d'empreinte digitale Authentec AES1510 ou un capteur d'empreinte digitale UPEK TCS3C ou un capteur d'empreinte digitale Veridicom est utilisé pour désactiver le dispositif de protection.

De manière non limitative, un capteur optique d'empreinte digitale réalise une capture d'une image représentative de l'empreinte ou réalise une capture d'une série d'images par un déplacement relatif de la partie du doigt comprenant l'empreinte digitale par rapport au lecteur optique d'empreinte. Le déplacement relatif du doigt par rapport au capteur optique permet, par exemple, de réaliser une opération de type scannage. L'utilisateur déplace, par exemple, son doigt devant une barrette de lecture optique.

Lorsque l'utilisateur de l'objet (3) portable de communication sans contact, place ou passe son doigt sur le dispositif (1011) de reconnaissance d'empreinte digitale, un signal représentatif de l'empreinte captée, est transmis, par des premiers moyens de communication à des moyens de traitement du dispositif d'authentification, pour être comparé à un ou plusieurs codes autorisés mémorisés dans les moyens de mémorisation du dispositif de protection (1). Si le résultat de la comparaison est valide, les moyens de traitement commandent, par des seconds moyens de communication, l'interrupteur (101) pour désactiver le dispositif (1) de protection pendant une durée déterminée, par exemple, de manière non limitative, de 1 seconde à 1 minute, cette durée permettant d'effectuer la transaction sans contact.

Selon une variante de réalisation, comme représenté à la figure 7, le dispositif de protection est désactivé par un dispositif (1012, 1014, 1013) d'authentification par reconnaissance visuelle, par exemple de l'iris. Le lecteur d'iris comprend par exemple une caméra numérique équipée d'un objectif de type macro, associée à un moyen d'éclairage de l'iris disposé proche de l'oeil.

Le dispositif d'authentification comporte, par exemple, un dispositif de reconnaissance de l'iris fixé sur des lunettes (1013) ou un autre support, porté par l'utilisateur, et relié par un câble (1014) de communication avec un circuit (1012) de traitement qui active ou désactive l'interrupteur (101). Lorsque l'utilisateur de l'objet (3) portable de communication sans contact, place le lecteur d'iris devant son oeil, un signal représentatif de l'empreinte d'iris, est transmis, par des premiers moyens de communication à des moyens de traitement du dispositif d'authentification, pour être comparé à un ou plusieurs codes autorisés mémorisés dans les moyens de mémorisation du dispositif de protection (1). Si le résultat de la comparaison est valide, les moyens de traitement commandent l'interrupteur (101), par des seconds moyens de communication, pour désactiver le dispositif (1) de protection.

Selon un autre exemple de réalisation, comme représenté à la figure 8, le dispositif (1) de protection est désactivé par un dispositif (1011) d'authentification par reconnaissance vocale comportant un microphone (1017) relié par un câble (1016) de communication à un circuit de traitement (1015). Lorsque l'utilisateur de l'objet portable de communication sans contact prononce un message clé audio dans le microphone, un signal représentatif du message audio est transmis par le câble (1016) au circuit (1015) de traitement. Le circuit de traitement comprend des moyens d'analyser ce signal représentatif du message audio et commande la désactivation du dispositif (1) de protection si le message audio est authentifié. L'authentification comprend par exemple une comparaison du signal représentatif du message audio prononcé avec un ou plusieurs signaux autorisés mémorisés dans les moyens de mémorisation du dispositif de protection (1).

Dans le cas où l'authentification échoue, l'interrupteur (101) reste dans un état stable d'autorisation du fonctionnement du dispositif (1) de protection. De manière non limitative, si l'authentification réussit, les moyens de traitement commandent l'ouverture de l'interrupteur (101) pendant une durée déterminée, comprise par exemple entre 1 seconde et 1 minute, puis retournent dans un état stable de commande de la fermeture de l'interrupteur (101) pour activer le dispositif de protection.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de protection (1) pour objet (3) de communication sans contact à circuit (31, 32) intelligent mémorisant des informations sensibles ou des informations donnant accès à des services, comprenant au moins des moyens (13) de réception radio de premiers signaux (S22) radio émis par une borne (2) ou un lecteur sans contact, dans une plage de fréquences de l'ordre du mégahertz à quelques dizaines de mégahertz, et des moyens (14) d'émission pour émettre sous la forme d'ondes (S21) radio de brouillage destinées à la borne (2) ou au lecteur, les ondes (S21) radio de brouillage étant produites dès l'alimentation du dispositif à la réception des premiers signaux avec une puissance suffisante pour être reçues par des moyens de réception radio de la borne (2) ou du lecteur et détériorer la réception par les moyens de réception radio de la borne (2) ou du lecteur de seconds signaux radio émis par l'objet (3) de communication sans contact, en réponse à l'activation par la borne (2) ou le lecteur, **caractérisé en ce que** l'alimentation du dispositif est obtenue par les premiers signaux (S22) reçus générant l'énergie de fonctionnement du dispositif (1) de protection pour activer un circuit (11) du dispositif (1) de protection générateur d'un signal (f) de brouillage et **en ce que** le dispositif comprend en outre des moyens (12) d'interruption pour valider ou invalider le brouillage par le dispositif (1) de protection, les moyens (12) d'interruption du dispositif (1) de protection étant commandés, selon le résultat d'une comparaison effectuée, par des moyens de comparaison du dispositif de protection entre d'une part, une information provenant de moyens interactifs (1010, 1011, 1012, 1015) d'authentification du dispositif de protection et d'autre part, une information mémorisée dans des moyens de mémorisation du dispositif de protection (1).

2. Dispositif de protection selon la revendication 1, **caractérisé en ce que** l'objet (3) de communication sans contact, protégé par le dispositif (1) de protection, est activé dans un domaine (20) de portée de la borne (2) ou du lecteur, la borne ou le lecteur, émettant les premiers signaux (S22) radio par des moyens d'émission radio, pour communiquer avec l'objet (3) de communication sans contact et alimenter l'objet de communication sans contact, en énergie par des moyens (33) de réception radio de l'objet de communication sans contact,
l'objet (3) de communication sans contact émettant les seconds signaux radio, par des moyens (33) d'émission radio de l'objet de communication sans contact, pour communiquer avec la borne (2) ou le lecteur, par les moyens de réception radio de la borne ou du lecteur.

3. Dispositif de protection selon la revendication 2, **caractérisé en ce que** les moyens (33) de réception radio de l'objet de communication sans contact et les moyens (13) de réception radio du dispositif (1) de protection comprennent chacun une bobine (102) appartenant à un circuit (108) résonnant accordé déterminé.

4. Dispositif de protection selon la revendication 3, **caractérisé en ce que** les moyens (33) d'émission radio de l'objet de communication sans contact et les moyens (14) d'émission radio du dispositif (1) de protection comprennent chacun la bobine (102) dans le circuit (108) résonnant accordé utilisé pour la réception radio.

5. Dispositif de protection selon une des revendications 2 à 4, **caractérisé en ce que** la communication, entre d'une part la borne ou le lecteur et d'autre part l'objet de communication sans contact, étant réalisée selon un protocole anti-collision déterminé, l'objet de communication sans contact émettant les seconds signaux radio en réponse aux premiers signaux radio au moins après l'émission d'une requête par les premiers signaux, le circuit (11) du dispositif (1) de protection commande une émission des ondes (S21) radio de brouillage en réponse aux premiers signaux radio, l'émission des ondes radio de brouillage se maintenant durant la réception des premiers signaux.

6. Dispositif de protection selon la revendication 5, **caractérisé en ce que** le signal de brouillage, reçu par la borne (2) ou le lecteur, est représentatif de données déterminées traitées par des moyens de traitement de la borne ou du lecteur, pour provoquer une réinitialisation dans l'exécution du protocole anti-collision.

7. Dispositif de protection selon la revendication 5, **caractérisé en ce que** le signal de brouillage, reçu par la borne (2) ou le lecteur, est représentatif de données déterminées traitées par des moyens de traitement de la borne ou du lecteur pour provoquer une saturation des moyens de traitement.

8. Dispositif de protection selon une des revendications 1 à 7, **caractérisé en ce que** le signal de brouillage généré, lors de la réception des premiers signaux émis par la borne ou le lecteur, par le circuit du dispositif de protection, est un signal prédéterminé pour économiser l'énergie dépensée par le circuit (11) en faveur de l'énergie utilisée par les moyens (14) d'émission radio du dispositif (1) de protection.

9. Dispositif de protection selon la revendication 8, **caractérisé en ce que** le circuit (11) du dispositif de protection comprend un compteur diviseur de la fréquence de modulation des premiers signaux émis par la borne (2) ou le lecteur.

10. Dispositif de protection selon une des revendications 1 à 9, **caractérisé en ce que** les moyens interactifs du dispositif de protection comprennent un capteur biométrique transmettant à un circuit d'authentification du dispositif de protection une information représentative d'un paramètre biométrique mesuré à comparer avec au moins une information représentative d'un paramètre biométrique d'un utilisateur autorisé à utiliser l'objet (3) de communication sans contact, constituant l'information mémorisée dans les moyens de mémorisation du dispositif de protection (1).

11. Dispositif de protection selon une des revendications 1 à 9, **caractérisé en ce que** les moyens interactifs du dispositif de protection comprennent un clavier alphanumérique transmettant à un circuit d'authentification du dispositif de protection une information représentative d'un code entré par un utilisateur à comparer avec au moins un code d'autorisation de l'utilisation de l'objet (3) de communication sans contact, constituant l'information mémorisée dans les moyens de mémorisation du dispositif de protection (1).

12. Dispositif de protection selon une des revendications 1 à 9, **caractérisé en ce que** les moyens d'interruption comprennent un interrupteur ou un bouton poussoir disposé à la surface du dispositif de protection ou dans un logement en creux aménagé dans l'épaisseur du dispositif de protection.

13. Dispositif de protection selon une des revendications 1 à 9, **caractérisé en ce que** les moyens d'interruption comprennent un interrupteur électronique disposé à l'extrémité d'une ligne de communication avec le dispositif de protection.

14. Système sécurisé portable de communication sans contact comprenant au moins un objet (3) de communication sans contact à circuit (31, 32) intelligent mémorisant des informations sensibles ou des informations donnant accès à des services, l'objet (3) de communication sans contact comprenant des moyens (33) de réception radio de signaux de communication et d'alimentation et des moyens (33) d'émission radio de signaux de communication, une première bobine déterminée dans un premier circuit résonnant accordé appartenant aux moyens (33) d'émission et de réception radio de l'objet (3) de communication sans contact, le système comprenant en outre un dispositif de protection selon la revendication 1.

15. Système sécurisé selon la revendication 14, **caractérisé en ce que** le dispositif (1) de protection et l'objet de communication sans contact, sont rendus solidaires dans un boîtier à fermeture sécurisée, dont la fermeture valide le fonctionnement du dispositif de protection.

16. Système sécurisé selon la revendication 15, **caractérisé en ce que** le boîtier sécurisé est moulé d'un seul bloc autour du dispositif (1) de protection et de l'objet (3) de communication sans contact.

17. Système sécurisé selon la revendication 15, **caractérisé en ce que** le boîtier sécurisé est fermé autour du dispositif (1) de protection et de l'objet (3) de communication sans contact, l'ouverture du boîtier étant commandée par une clé sécurisée.

18. Système sécurisé selon une des revendications 15 à 17, **caractérisé en ce que** le boîtier sécurisé comporte un logement pour accueillir au moins un objet supplémentaire de communication sans contact mémorisant des informations sensibles ou des informations donnant accès à des services.

19. Système sécurisé selon une des revendications 14 à 18, **caractérisé en ce que** les moyens interactifs d'authentification comprennent un clavier alphanumérique transmettant aux moyens de comparaison, une information représentative d'un code entré par un utilisateur, comparé avec au moins un code d'autorisation de l'utilisation de l'objet (3) de communication sans contact.

20. Système sécurisé selon une des revendications 14 à 18, **caractérisé en ce que** les moyens interactifs d'authentification comprennent un capteur biométrique transmettant aux moyens de comparaison, une information représentative d'un paramètre biométrique mesuré, comparée avec au moins une information représentative d'un paramètre biométrique d'un utilisateur autorisé à utiliser l'objet (3) de communication sans contact.

21. Système sécurisé selon la revendication 20, **caractérisé en ce que** le capteur biométrique est un capteur d'empreinte digitale.

22. Système sécurisé selon la revendication 21, **caractérisé en ce que** le capteur d'empreinte digitale est un lecteur optique devant lequel l'utilisateur passe son doigt.

23. Système sécurisé selon la revendication 20, **caractérisé en ce que** le capteur biométrique est un lecteur d'iris.

24. Système sécurisé selon la revendication 20, **caractérisé en ce que** le capteur biométrique est un analyseur d'empreinte vocale.

25. Système sécurisé selon une des revendications 19 à 24, **caractérisé en ce que** les moyens interactifs d'authentification et les moyens de comparaison comprennent des moyens d'alimentation pour réaliser la comparaison et commander les moyens d'interruption avant l'entrée du système sécurisé dans le domaine de portée.

26. Dispositif de protection selon la revendication 1, **caractérisé en ce qu'**il comprend au moins des moyens (13) de réception de signaux (S22) radio dans une plage de fréquences de l'ordre du mégahertz à quelques dizaines de mégahertz, les signaux (S22) radio reçus générant l'énergie de fonctionnement du dispositif (1) de protection pour activer un circuit (11) générateur d'un signal (f) de brouillage à émettre par des moyens (14) d'émission du dispositif de protection sous la forme d'ondes (S21) radio de brouillage, une bobine (102) déterminée dans un circuit (108) résonnant accordé appartenant aux moyens d'émission et de réception radio du dispositif (1) de protection, et des moyens (12) d'interruption validant ou invalidant le fonctionnement du générateur du signal de brouillage du dispositif de protection (1), les moyens (12) d'interruption du dispositif (1) de protection étant commandés, selon le résultat d'une comparaison effectuée, par des moyens de comparaison entre d'une part, une information provenant de moyens interactifs (1010, 1011, 1012, 1015) d'authentification et d'autre part, une information mémorisée dans des moyens de mémorisation du dispositif de protection (1).

27. Dispositif de protection selon la revendication 26, **caractérisé en ce que**, le signal de brouillage est émis dès réception des premiers signaux avant la fin d'une requête conforme à un protocole de communication.

28. Dispositif de protection selon la revendication 26 ou 27, **caractérisé en ce qu'**au moins les moyens d'émission et de réception radio du dispositif de protection et le circuit du dispositif de protection sont insérés dans un boîtier de même dimensions que l'objet de communication sans contact à circuit intelligent protégé.

29. Dispositif de protection selon une des revendications 26 à 28, **caractérisé en ce que** les moyens d'interruption comprennent un interrupteur disposé à la surface du dispositif de protection ou dans un logement en creux aménagé dans l'épaisseur du dispositif de protection.

30. Dispositif de protection selon une des revendications 26 à 28, **caractérisé en ce que** les moyens d'interruption comprennent un interrupteur disposé à l'extrémité d'une ligne de communication avec le dispositif de protection.

## Claims

1. Protection device (1) for a contactless communication object (3) with an intelligent circuit (31, 32) which stores sensitive information or information giving access to services, comprising at least radio reception means (13) for receiving first radio signals (S22) transmitted by a terminal (2) or a contactless reader in a range of frequencies of the order of a megahertz to several tens of megahertz, and transmission means (14) for transmitting in the form of interfering radio waves (S21) intended for the terminal (2) or the reader, the interfering radio waves (S21) being produced from the time of power supply to the device upon the reception of the first signals with a sufficient power to be received by radio reception meons of the terminal (2) or of the reader and to degrade the reception by the radio reception means of the terminal (2) or the reader of second radio signals transmitted by the contactless communication object (3) in response to the activation by the terminal (2) or the reader, **characterised in that** the power supply to the device is obtained by the first signals (S22) received generating the operational power of the protection device (1) in order to activate a circuit (11) of the protection device (1) which generates an interfering signal (f), and **in that** the device further comprises interrupt means (12) to validate or invalidate the interference by the protection device (1), the interrupt means (12) of the protection device (1) being controlled, according to the result of a comparison carried out, by comparison means of the protection device between on the one hand an information item originating from interactive authentication means (1010, 1011, 1012, 1015) of the protection device and on the other hand an information item stored in memory means of the protection device (1).

2. Protection device as claimed in Claim 1, **characterised in that** the contactless communication object (3) protected by the protection device (1) is activated in a range (20) of the terminal (2) or of the reader, the terminal or the reader transmitting the first radio signals (S22) by ratio transmission means in order to communicate with the contactless communication object and to supply the contactless communication object with power by radio reception means (33) of the contactless communication object, the contactless communication object (3) transmitting the second radio signals by radio transmission means (33) of the contactless communication object in order to communicate with the terminal (2) or the reader by the radio reception means of the terminal or of the reader.

3. Protection device as claimed in Claim 2, **characterised in that** the radio reception means (33) of the contactless communication object and the radio reception means (13) of the protection device (1) each comprise a coil (102) belonging to a defined tuned resonant circuit (108).

4. Protection device as claimed in Claim 3, **characterised in that** the radio transmission means (33) of the contactless communication object and the radio transmission means (14) of the protection device each comprise the coil (102) in the tuned resonant circuit (108) used for the radio reception.

5. Protection device as claimed in any one of Claims 2 to 4, **characterised in that** the communication between on the one hand the terminal or the reader and on the other hand the contactless communication object is effected according to a defined anti-collision protocol, the contact less communication object transmitting the second radio signals in response to the first radio signals at least after the transmission of a request by the first signals, the circuit (11) of the protection device controlling a transmission of interfering radio waves (S21) in response to the first radio signals, the transmission of the interfering radio waves being maintained during the reception of the first signals.

6. Protection device as claimed in Claim 5, **characterised in that** the interfering signal received by the terminal (2) or the reader represents defined data processed by processing means of the terminal or of the reader in order to cause a reinitialisation in the execution of the anti-collision protocol.

7. Protection device as claimed in Claim 5, **characterised in that** the interfering signal received by the terminal (2) or the reader represents defined data processed by processing means of the terminal or of the reader in order to cause a saturation of the processing means.

8. Protection device as claimed in any one of Claims 1 to 7, **characterised in that** the interfering signal generated by the circuit of the protection device during the reception of the first signals transmitted by the terminal or the reader is predetermined signal for economising on the power consumed by the circuit (11) in favour of the power used by the radio transmission means (14) of the protection device (1).

9. Protection device as claimed in Claim 8, **characterised in that** the circuit (11) of the protection device comprises a counter which divides the modulation frequency of the first signals transmitted by the terminal (2) or the reader.

10. Protection device as claimed in any one of Claims 1 to 9, **characterised in that** the interactive means of the protection device comprise a biometric sensor transmitting to an authentication circuit of the protection device an information item representing a measured biometric parameter to be compared with at least one information item representing a biometric parameter of a user authorised to use the contactless communication object (3), constituting the information item stored in the memory means of the protection device (1).

11. Protection device as claimed in any one of the Claims 1 to 9, **characterised in that** the interactive means of the protection device comprise an alphanumeric keyboard transmitting to an authenti cation circuit of the protection device an information item representing a code entered by a user to compare with at least one code for authorisation of the use of the contactless communication object (3) constituting the information stored in the memory means of the protection device (1).

12. Protection device as claimed in any one of Claims 1 to 9, **characterised in that** the interrupt means comprise an interrupter or a push-button disposed on the surface of the protection device or in hollow recess provided in the thickness of the protection device.

13. Protection device as claimed in any one of Claims 1 to 9, **characterised in that** the interrupt means comprise an electronic interrupter disposed at the end of a line for communication with the protection device.

14. Portable secure contactless communication system comprising at least one contactless communication object (3) with an intelligent circuit (31, 32) which stores sensitive information or information giving access to services, the contactless communication object (3) comprising radio reception means (33) for receiving communication and supply signals and radio transmission means (33) for transmitting communication signals, a first defined coil in a first tuned resonant circuit belonging to the radio transmission and reception means (33) of the contactless communication object, the system further comprising a protection device as claimed in Claim 1.

15. Secure system as claimed in Claim 14, **characterised in that** the protection device (1) and the contactless communication object are joined in a housing with secure closure, of which the closure validates the operation of the protection device.

16. Secure system as claimed in Claim 15, **characterised in that** the secure housing is moulded in one piece around the protection device (1) and the contactless communication object (3).

17. Secure system as claimed in Claim 15, **characterised in that** the secure housing is closed around the protection device (1) and the contactless communication object (3), the opening of the housing being controlled by a secure key.

18. Secure system as claimed in any one of Claims 15 to 17, **characterised in that** the secure housing includes a housing to receive at least one additional contactless communication object which stores sensitive information or information giving access to services.

19. Secure system as claimed in any one of Claims 14 to 18, **characterised in that** the interactive authentication means comprise an alphanumeric keyboard which transmits to the comparison means an information item representing a code entered by a user, compared with at least one code for authorisation of the use of the contactless communication object (3).

20. Secure system as claimed in any one of Claims 14 to 18, **characterised in that** the interactive authentication means comprise a biometric sensor which transmits to the comparison means an information item representing a measured biometric parameter compared with at least one information item representing a biometric parameter of a user authorised to use the contactless communication object (3).

21. Secure system as claimed in Claim 20, **characterised in that** the biometric sensor is a fingerprint sensor.

22. Secure system as claimed in Claim 21, **characterised in that** the fingerprint sensor is an optical reader in front of which the user passes his finger.

23. Secure system as claimed in Claim 20, **characterised in that** the biometric sensor is an iris reader.

24. Secure system as claimed in Claim 20, **characterised in that** the biometric sensor is a voiceprint analyser.

25. Secure system as claimed in any one of Claims 19 to 24**, characterised in that** the interactive authentication mans and the comparison means comprise supply means for carrying out the comparison and controlling the interrupt means before the secure systems comes into rage.

26. Protection device as claimed in Claim 1, **characterised in that** it comprises at least reception means (13) for receiving radio signals (S22) in a range of frequencies of the order of a megaherz to several tens of megahertz, the received radio signals (S22) generating the operating power of the protection device (1) in order to activate a circuit (11) for generating an interfering signal (f) to be transmitted by transmission means (14) of the protection device in the form of interfering radio waves (S21), a defined coil (102) in a tuned resonant circuit (108) belonging to the radio transmission and reception means of the protection device (1), and interrupt :eans (12) which validate or invalidate the operation of the interfering signal generator of the protection device (1), the interrupt means (12) of the protection device (1) being controlled, according to the result of a comparison which has been carried out, by comparison means between on the one hand an information item originating from interactive authentication means (1010, 1011, 1012, 1015) and on the other hand an information item stored in memory means of the protection device (1).

27. Protection device as claimed in Claim 26, **characterised in that** the interfering signal is transmitted form the time of reception of the first signals before the end of a request according to a communication protocol.

28. Protection device as claimed in Claim 26 or Claim 27, **characterised in that** at least the radio transmission and reception means of the protection device and the circuit of the protection device are inserted into a housing of the same dimensions as the protected contactless communication object with an intelligent circuit.

29. Protection device as claimed in any one of Claims 26 to 28, **characterised in that** the interrupt means comprise a switch disposed on the surface of the protection device or in a hollow recess provided in the thickness of the protection device.

30. Protection device as claimed in any one of Claims 26 to 28, **characterised in that** the interrupt means comprise a switch disposed at the end of a line for communication with the protection device.

## Patentansprüche

1. Schutzvorrichtung (1) für ein kontaktloses Kommunikationsobjekt (3) mit intelligentem Schaltkreis (31, 32), der sensible Informationen oder Informationen, die Zugriff auf Dienste bereitstellen, speichert, die mindestens aufweist: Mittel (13) zum Empfangen von ersten Funksignalen (S22) über Funk, die von einem Anschluss (2) oder einem Leser ohne Kontakt in einem Frequenzbereich der Megahertz-Größenordnung bis zu einigen Dutzend Megahertz gesendet werden, und Sendemittel (14) zum Senden in Form von Stör-Funkwellen (S21), die für den Anschluss (2) oder den Leser bestimmt sind, wobei die Stör-Funkwellen (S21) erzeugt werden ab der Versorgung der Vorrichtung beim Empfangen der ersten Signale mit einer Leistung, die ausreicht, damit sie von Funkempfangsmitteln des Anschlusses (2) oder des Lesers empfangen werden und den Empfang durch die Funkempfangsmittel des Anschlusses (2) oder des Lesers von zweiten Funksignalen, die von dem kontaktlosen Kommunikationsobjekt (3) ausgesendet werden, in Antwort auf die Aktivierung durch den Anschluss (2) oder den Leser verschlechtern, **dadurch gekennzeichnet, dass** die Versorgung der Vorrichtung durch die ersten empfangenen Signale (S22) erreicht wird, die die Energie zum Funktionieren der Schutzvorrichtung (1) zum Aktivieren eines Schaltkreises (11) der Schutzvorrichtung (1) erzeugen, der ein Störsignal (f) erzeugt, und dadurch, dass die Vorrichtung ferner Unterbrechungsmittel (12) zum Bestätigen oder zum Unterdrücken der Störung durch die Schutzvorrichtung (1) aufweist, wobei die Unterbrechungsmittel (12) der Schutzvorrichtung (1) entsprechend dem Ergebnis eines durch Vergleichsmittel der Schutzvorrichtung durchgeführten Vergleichs zwischen einerseits einer Information, die von interaktiven Mitteln (1010, 1011, 1012, 1015) zum Authentifizieren der Schutzvorrichtung stammt, und andererseits einer Information, die in Speichermitteln der Schutzvorrichtung (1) gespeichert ist, gesteuert werden.

2. Schutzvorrichtung gemäß Anspruch 1, **dadurch gekennzeichnet, dass** das kontaktlose Kommunikationsobjekt (3), das von der Schutzvorrichtung (1) geschützt wird, in einer Reichweite (20) des Anschlusses (2) oder des Lesers aktiviert wird, wobei der Anschluss oder der Leser die ersten Funksignale (S22) mittels Funksendemitteln zum Kommunizieren mit dem kontaktlosen Kommunikationsobjekt (3) und zum Versorgen des kontaktlosen Kommunikationsobjektes mit Energie mittels Funkempfangsmitteln (33) des kontaktlosen Kommunikationsobjektes aussenden,
wobei das kontaktlose Kommunikationsobjekt (3) die zweiten Funksignale mittels Funk-Sendemitteln (33) des kontaktlosen Kommunikationsobjektes zum Kommunizieren mit dem Anschluss (2) oder dem Leser mittels der Funkenpfangsmittel des Anschlusses oder des Lesers aussendet.

3. Schutzvorrichtung gemäß Anspruch 2, **dadurch gekennzeichnet, dass** die Funkempfangsmittel (33) des kontaktlosen Kommunikationsobjektes und die Funkempfangsmittel (13) der Schutzvorrichtung (1) jeweils eine Spule (102) aufweisen, die zu einem bestimmten abgestimmten Resonanzkreis (108) gehört.

4. Schutzvorrichtung gemäß Anspruch 3, **dadurch gekennzeichnet, dass** die Funksendemittel (33) des kontaktlosen Kommunikationsobjektes und die Funksendemittel (14) der Schutzvorrichtung (1) jeweils die Spule (102) in dem abgestimmten Resonanzkreis (108) aufweisen, der für den Funkempfang verwendet wird.

5. Schutzvorrichtung gemäß einem der Ansprüche 2 bis 4, **dadurch gekennzeichnet, dass** die Kommunikation zwischen einerseits dem Anschluss oder dem Leser und andererseits dem kontaktlosen Kommunikationsobjekt, die gemäß einem bestimmten Antikollisionsprotokoll erfolgt, wobei das kontaktlose Kommunikationsobjekt die zweiten Funksignale in Antwort auf die ersten Funksignale zumindest nach dem Senden einer Anfrage durch die ersten Signale aussendet, der Schaltkreis (11) der Schutzvorrichtung (1) ein Aussenden der Störfunkwellen (S21) in Antwort auf die ersten Funksignale steuert, wobei das Aussenden der Störfunkwellen während des Empfangs der ersten Signale aufrechterhalten wird.

6. Schutzvorrichtung gemäß Anspruch 5, **dadurch gekennzeichnet, dass** das Störsignal, das von dem Anschluss (2) oder dem Leser empfangen wird, für bestimmte Daten repräsentativ ist, die von Verarbeitungsmitteln des Anschlusses oder des Lesers verarbeitet werden, damit eine Re-Initialisierung bei der Ausführung des Antikollisionsprotokolls bewirkt wird.

7. Schutzvorrichtung gemäß Anspruch 5, **dadurch gekennzeichnet, dass** das Störsignal, das von dem Anschluss (2) oder dem Leser empfangen wird, für bestimmte Daten repräsentativ ist, die von Verarbeitungsmitteln des Anschlusses oder des Lesers verarbeitet werden, damit eine Sättigung der Verarbeitungsmittel bewirkt wird.

8. Schutzvorrichtung gemäß einem der Ansprüche 1 bis 7, **dadurch gekennzeichnet, dass** das Störsignal, das beim Empfang der ersten Signale, die von dem Anschluss oder dem Leser ausgesendet werden, von dem Schaltkreis der Schutzvorrichtung erzeugt wird, ein vorbestimmtes Signal zum Sparen der Energie ist, die von dem Schaltkreis (11) verbraucht wird, zugunsten der Energie, die von den Funksendemitteln (14) der Schutzvorrichtung (1) genutzt wird.

9. Schutzvorrichtung gemäß Anspruch 8, **dadurch gekennzeichnet, dass** der Schaltkreis (11) der Schutzvorrichtung einen Teilungszähler der Modulationsfrequenz der ersten Signale aufweist, die von dem Anschluss (2) oder dem Leser ausgesendet werden.

10. Schutzvorrichtung gemäß einem der Ansprüche 1 bis 9, **dadurch gekennzeichnet, dass** die interaktiven Mittel der Schutzvorrichtung einen biometrischen Sensor aufweisen, der einem Authentifizierungsschaltkreis der Schutzvorrichtung eine für einen gemessenen biometrischen Parameter repräsentative Information übermittelt, zum Vergleichen mit mindestens einer Information, die für einen biometrischen Parameter eines Benutzers repräsentativ ist, der zum Nutzen des kontaktlosen Kommunikationsobjektes (3) autorisiert ist, die die Information darstellt, die in den Speichermitteln der Schutzvorrichtung gespeichert ist.

11. Schutzvorrichtung gemäß einem der Ansprüche 1 bis 9, **dadurch gekennzeichnet, dass** die interaktiven Mittel der Schutzvorrichtung eine alphanumerische Tastatur aufweisen, die einem Authentifizierungsschaltkreis der Schutzvorrichtung eine Information übermittelt, die für einen Code repräsentativ ist, der von einem Benutzer eingegeben wurde, der mit mindestens einem Code zur Autorisierung der Benutzung des kontaktlosen Kommunikationsobjektes (3) zu vergleichen ist, der die Information darstellt, die in den Speichermitteln der Schutzvorrichtung (1) gespeichert ist.

12. Schutzvorrichtung gemäß einem der Ansprüche 1 bis 9, **dadurch gekennzeichnet, dass** die Unterbrechungsmittel einen Schalter oder eine Drucktaste aufweisen, die/der auf der Oberfläche der Schutzvorrichtung oder in einer hohlen Aufnahme angeordnet ist, die in der Dicke der Schutzvorrichtung eingerichtet ist.

13. Schutzvorrichtung gemäß einem der Ansprüche 1 bis 9, **dadurch gekennzeichnet, dass** die Unterbrechungsmittel einen elektronischen Schalter aufweisen, der am Ende einer Kommunikationsleitung mit der Schutzvorrichtung angeordnet ist.

14. Gesichertes tragbares kontaktloses Kommunikationssystem, mindestens ein kontaktloses Kommunikationsobjekt (3) mit intelligentem Schaltkreis (31, 32) aufweisend, der sensible Informationen oder Informationen, die Zugriff zu Diensten bereitstellen, speichert, wobei das kontaktlose Kommunikationsobjekt (3) Mittel (33) zum Funkempfang von Kommunikationssignalen und zur Versorgung sowie Mittel (33) zum Funksenden von Kommunikationssignalen aufweist, wobei eine erste bestimmte Spule in einem ersten abgestimmten Resonanzkreis zu den Mitteln (33) zum Senden und Empfangen mittels Funk des kontaktlosen Kommunikationsobjektes (3) gehört, wobei das System ferner eine Schutzvorrichtung gemäß Anspruch 1 aufweist.

15. Gesichertes System gemäß Anspruch 14, **dadurch gekennzeichnet, dass** die Schutzvorrichtung (1) und das kontaktlose Kommunikationsobjekt in einem Gehäuse mit gesichertem Verschluss einstückig vorgesehen sind, wobei dessen Verschluss das Funktionieren der Schutzvorrichtung validiert.

16. Gesichertes System gemäß Anspruch 15, **dadurch gekennzeichnet, dass** das gesicherte Gehäuse aus einem einzigen Block um die Schutzvorrichtung (1) und das kontaktlose Kommunikationsobjekt (3) geformt ist.

17. Gesichertes System gemäß Anspruch 15, **dadurch gekennzeichnet, dass** das gesicherte Gehäuse um die Schutzvorrichtung (1) und das kontaktlose Kommunikationsobjekt (3) herum geschlossen ist, wobei das Öffnen des Gehäuses mittels eines gesicherten Schlüssels gesteuert wird.

18. Gesichertes System gemäß einem der Ansprüche 15 bis 17, **dadurch gekennzeichnet, dass** das gesicherte Gehäuse eine Aufnahme zum Aufnehmen von mindestens einem zusätzlichen kontaktlosen Kommunikationsobjekt aufweist, das sensiole Informationen oder Informationen speichert, die Zugriff zu Diensten bereitstellen.

19. Gesichertes System gemäß einem der Ansprüche 14 bis 13, **dadurch gekennzeichnet, dass** die interaktiven Autheatifizierungsmittel eine alphanumerische Tastatur aufweisen, die den Vergleichsmitteln eine Information übermittelt, die für einen Code repräsentativ ist, der von einem Benutzer eingegeben wird, der mit mindestens einem Code zur Autorisierung der Benutzung des kontaktlosen Kommunikationsobjektes (3) verglichen wird.

20. Gesichertes System gemäß einem der Ansprüche 14 bis 18, **dadurch gekennzeichnet dass** die interaktiven Authemtifizierungsmittel einen biometrischen Sensor aufweisen, der den Vergleichsmitteln eine Information übermittelt, die für einen gemessenen biometrischen Parameter repräsentativ ist, die mit mindestens einer Information verglichen wird, die für einen biometrischen Parameter eines Benutzers repräsentativ ist, der zur Benutzung des kontaktlosen Kommunikationsobjektes (3) autorisiert ist.

21. Gesichertes System gemäß Anspruch 20, **dadurch gekennzeichnet, dass** der biometrische Sensor ein Sensor für einen digitalen Fingerabdruck ist.

22. Gesichertes System gemäß Anspruch 21, **dadurch gekennzeichnet, dass** der Sensor für den digitalen Fingerabdruck ein optischer Leser ist, vor dem der Benutzer seinen Finger vorbeiführt.

23. Gesichertes System gemäß Anspruch 20, **dadurch gekennzeichnet, dass** der biometrische Sensor ein Iris-Leser ist.

24. Gesichertes System gemäß Anspruch 20, **dadurch gekennzeichnet, dass** der biometrische Sensor ein Stimmabdruck-Abtaster ist.

25. Gesichertes System gemäß einem der Ansprüche 19 bis 24, **dadurch gekennzeichnet, dass** die interaktiven Authentifizierungsmittel und die Vergleichsmittel Versorgungsmittel zum Durchführen des Vergleichs und zum Steuern der Unterbrechungsmittel vor dem Eintreten des gesicherten Systems in den Bereich der Reichweite aufweisen.

26. Schutzvorrichtung gemäß Anspruch 1, **dadurch gekennzeichnet, dass** sie mindestens aufweist: Mittel (13) zum Empfangen von Funksignalen (S22) in einem Frequenzbereich der Megahertz-Größenordnung bis zu einigen Dutzend Megahertz, wobei die empfangenen Funksignale (S22) die Energie für das Funktionieren der Schutzvorrichtung (1) zum Aktivieren eines Schaltkreises (11) erzeugen, der ein Störsignal (f) erzeugt, das von Sendemitteln (14) der Schutzvorrichtung in Form von Funkstörwellen zu versenden ist, wobei eine bestimmte Spule (102) in einem abgestimmten Resonanzkreis (108) zu den Funk-Sende- und Empfangsmitteln der Schutzvorrichtung (1) gehört, und Unterbrechungsmittel (12), die die Funktion des Störsignal-Generators der Schutzvorrichtung (1) bestätigen oder unterdrücken, wobei die Unterbrechungsmittel (12) der Schutzvorrichtung (1) entsprechend dem Ergebnis eines von Vergleichsmitteln durchgeführten Vergleichs zwischen einerseits einer Information, die von interaktiven Mitteln (1010, 1011, 1012, 1015) zur Authentifizierung stammt, und andererseits einer Information, die in Speichermitteln der Schutzvorrichtung (1) gespeichert ist, gesteuert werden.

27. Schutzvorrichtung gemäß Anspruch 26, **dadurch gekennzeichnet, dass** das Störsignal nach dem Empfangen der ersten Signale vor dem Ende einer Anfrage gemäß einem Kommunikationsprotokoll ausgesendet wird.

28. Schutzvorrichtung gemäß Anspruch 26 oder 27, **dadurch gekennzeichnet, dass** zumindest die Funk-Sende- und Empfangs-Mittel der Schutzvorrichtung und der Schaltkreis der Schutzvorrichtung in ein Gehäuse eingesetzt sind, das dieselben Abmessungen wie das geschützte kontaktlose Kommunikationsobjekt mit intelligentem Schaltkreis aufweist.

29. Schutzvorrichtung gemäß einem der Ansprüche 26 bis 28, **dadurch gekennzeichnet, dass** die Unterbrechungsmittel einen Schalter aufweisen, der auf der Oberfläche der Schutzvorrichtung oder in einer hohlen Aufnahme angeordnet ist, die in der Dicke der Schutzvorrichtung vorgesehen ist.

30. Schutzvorrichtung gemäß einem der Ansprüche 26 bis 28, **dadurch gekennzeichnet, dass** die Unterbrechungsmittel einen Schalter aufweisen, der an dem Ende einer Kommunikationsleitung mit der Schutzvorrichtung angeordnet ist.
